# EUROPEAN PATENT SPECIFICATION

(11) **EP 3 776 926 B1**
(45) Date of publication and mention of the grant of the patent: **11.03.2026**
(21) Application number: 19728568.7
(22) Date of filing: 18.01.2019
(51) Int. Cl.: H01Q 21/06, H01Q 1/48, H01Q 1/24, H01Q 1/38

(54) **ANTENNA APPARATUS AND PREPARATION METHOD THEREOF**
ANTENNENVORRICHTUNG UND HERSTELLUNGSVERFAHREN DAFÜR
APPAREIL D'ANTENNE ET PROCÉDÉ DE PRÉPARATION ASSOCIÉ

(30) Priority: 04.04.2018 CN 201810305148
(43) Date of publication of application: 17.02.2021
(73) Proprietor: BOE Technology Group Co., Ltd., Beijing 100015 (CN)
(72) Inventor: QIN, Guangkui, Beijing 100176 (CN); XU, Xiaoguang, Beijing 100176 (CN)
(74) Representative: AWA Sweden AB
(86) International application number: PCT/CN2019/072386
(87) International publication number: WO 2019/192245

(56) References cited:
- CN-A- 101 030 526
- CN-A- 105 355 705
- DE-B3- 102013 001 046
- US-A1- 2014 085 148
- US-A1- 2015 243 829
- US-A1- 2016 260 755

## Description

### TECHNICAL FIELD

The present disclosure relates to antenna technology, and particularly to an antenna apparatus and a preparation method thereof.

### BACKGROUND

At present, main principle of an electromagnetic wave signal sensing method is to utilize an electromagnetic wave signal to form a DC signal for detection. Specifically, the method of forming the DC signal is different for signals of different wavelengths. For example, for microwaves and electromagnetic waves with long wavelengths, an antenna is usually used to receive electromagnetic waves, and a rectifier diode is then used to form DC current. For infrared light or visible light with a short wavelength, a semiconductor material or a quantum dot material is usually used to absorb photons and then form migration of electrons or holes to produce a direct current.

The US patent application US 2014/085148 A1 discloses a method and apparatus for an optical frequency rectifier. The method begins with selection of an antenna having a terminal tip with a sharp edge. The antenna is layered with a substrate and a first coating. A first electrode and a metallic/mCNT antenna are layered on the first coating, and a plasmonic layer is then added. A gap is formed which is bounded on one side by the terminal ends of the plasmonic layer and the first coating, and a second electrode and a second coating on the other. The second electrode is layered upon the second coating which is layered upon the substrate. A set of AC currents is induced along the length of the antenna. The method then calculates whether or not the induced AC currents are large enough to create voltages for field emission. If the voltages are large enough, then a forward bias and a reverse bias are initiated. Due to the asymmetry in these tunneling barriers, a positive net DC current is delivered to an external circuit.

The US patent application US 2016/260755 A1 discloses a rectenna that converts infrared radiation to electrical energy. A rectenna comprises a conductive layer. A thin insulator layer is formed on the conductive layer, and a nanoantenna is formed on the thin insulator layer. The thin insulator layer acts as a tunnel junction of a tunnel diode.

The DE patent application DE 10 2013 001046 B3 discloses a detector for infrared and/or THz radiation.

### BRIEF SUMMARY

The invention is defined by the appended claims.

An embodiment of the present disclosure provides an antenna apparatus. The antenna apparatus includes a first substrate; a second substrate opposite the first substrate; a first antenna layer on a side of the second substrate facing the first substrate; an insulating layer on a side of the first antenna layer facing the first substrate; a conductive layer on a side of the insulating layer facing the first substrate. The first antenna layer is configured to receive signals in different frequency ranges, and the first antenna layer, the insulating layer and the conductive layer are all between the first substrate and the second substrate. The first antenna layer comprises a plurality of antenna units, each of the plurality of antenna units comprises a radiation patch and is configured to receive the signals in one of the different frequency ranges. The insulating layer comprises a plurality of sub-insulating layers; the conductive layer comprises a plurality of conductive electrodes; and the plurality of the sub-insulating layers, the plurality of the conductive electrodes, and the plurality of the antenna units may be in one-to-one correspondence. The radiation patch, at least one of the plurality of conductive electrodes, and at least one of the plurality of sub-insulating layers constitutes a rectifier diode structure.

Optionally, at least one of the plurality of the antenna units further comprises a dielectric layer, and a ground electrode; the radiation patch is on a side of the dielectric layer facing the first substrate; and the ground electrode is on a side of the dielectric layer facing the second substrate.

Optionally, the antenna apparatus may further include a conductive wire for leading out the signals. The conductive wire is on the side of the dielectric layer facing the second substrate; an orthogonal projection of the conductive wire on the first substrate and an orthographic projection of the radiation patch on the first substrate overlap.

A conductivity of the radiation patch is higher than a conductivity of the conductive electrode.

Optionally, an orthographic projection of the conductive electrode on the first substrate and an orthographic projection of the radiation patch on the first substrate have a first overlapping region.

Optionally, an orthographic projection of the sub-insulating layer on the first substrate overlaps the first overlapping region.

Optionally, the radiation patch comprises a plurality of micro-metal patches.

Optionally, each of the plurality of antenna units has a shape of a square or a rectangle and the plurality of micro-metal patches are distributed on the first substrate in a cluster or strip form.

Optionally, the conductive electrode and the radiation patch of a same antenna unit have a substantially same pattern.

Optionally, an orthographic projection of the conductive electrode on the first substrate covers an orthographic projection of the radiation patch of a same antenna unit on the first substrate.

Optionally, the conductive electrode is made of a transparent conductive material.

Optionally, the ground electrode has a shape of a square or a circle.

Optionally, the dielectric layer includes liquid crystals.

The antenna apparatus further comprises a second antenna layer, wherein the second antenna layer is between the first substrate and the second substrate, and the second antenna layer is configured to radiate the signals.

Another example of the present disclosure is a method of preparing an antenna apparatus. The method includes providing a first substrate; forming a conductive layer on the first substrate, the conductive layer comprising a plurality of conductive electrodes; forming an insulating layer on a side of the conductive layer opposite from the first substrate, the insulating layer comprising a plurality of sub-insulating layers; providing a second substrate opposite the first substrate; and forming a first antenna layer between the insulating layer and the second substrate, the first antenna layer comprising a plurality of antenna units, each of the antenna units being configured to receive signals in a different frequency range. The first antenna layer comprises a radiation patch; the first antenna layer is configured to receive signals in different frequency ranges, and the first antenna layer, the insulating layer and the conductive layer are all between the first substrate and the second substrate. The first antenna layer comprises a plurality of antenna units, each of the plurality of antenna units being configured to receive the signals in one of the different frequency ranges; the insulating layer comprises a plurality of sub-insulating layers; the conductive layer comprises a plurality of conductive electrodes; and the plurality of the sub-insulating layers, the plurality of the conductive electrodes, and the plurality of the antenna units are in one-to-one correspondence. The radiation patch, at least one of the plurality of conductive electrodes, and at least one of the plurality of sub-insulating layers constitute a rectifier diode structure.

Optionally, forming the insulating layer on the side of the conductive layer opposite from the first substrate comprises forming the insulating layer on the side of the conductive layer opposite from the first substrate by a process of multiple exposures or a gray scale exposure.

Optionally, forming the first antenna layer between the insulating layer and the second substrate comprises forming a radiation patch on a side of the insulating layer opposite from the first substrate by a process of multiple exposures or a gray scale exposure; forming a ground electrode on a side of the second substrate facing the first substrate; and forming a dielectric layer between the ground electrode and the radiation patch.

Optionally, after the ground electrode is formed on the side of the second substrate facing the first substrate, the method further includes: forming a conductive wire on the side of the second substrate facing the first substrate, the conductive wire being configured to leading out the signals.

The method for preparing the antenna apparatus further comprises forming a second antenna layer on the first substrate or the second substrate, wherein the second antenna layer is configured to radiate the signals.

### BRIEF DESCRIPTION OF THE DRAWINGS

The subject matter which is regarded as the disclosure is particularly pointed out and distinctly claimed in the claims at the conclusion of the specification. The foregoing and other objects, features, and advantages of the present disclosure are apparent from the following detailed description taken in conjunction with the accompanying drawings in which:
Fig. 1 is a schematic structural diagram of a signal processing apparatus according to one embodiment of the present disclosure;
Fig. 2 is a schematic structural diagram of a signal processing apparatus according to one embodiment of the present disclosure;
Fig. 3 is a top view of a signal processing apparatus according to one embodiment of the present disclosure;
Fig. 4 is a top view of a signal processing apparatus according to one embodiment of the present disclosure;
Fig. 5A is a top view of a conductive electrode according to one embodiment of the present disclosure;
Fig. 5B is a top view of a conductive electrode according to one embodiment of the present disclosure;
Fig. 6A is a schematic diagram of distribution of antenna units according to one embodiment of the present disclosure;
Fig. 6B is a schematic diagram of distribution of antenna units according to one embodiment of the present disclosure;
Fig. 6C is a schematic diagram of distribution of antenna units according to one embodiment of the present disclosure;
Fig. 6D is a schematic diagram of distribution of antenna units according to one embodiment of the present disclosure;
Fig. 6E is a schematic diagram of distribution of antenna units according to one embodiment of the present disclosure;
Fig. 6F is a schematic diagram of distribution of antenna units according to one embodiment of the present disclosure;
Fig. 7 is a flowchart of a method for preparing a signal processing apparatus according to one embodiment of the present disclosure.

### DETAILED DESCRIPTION

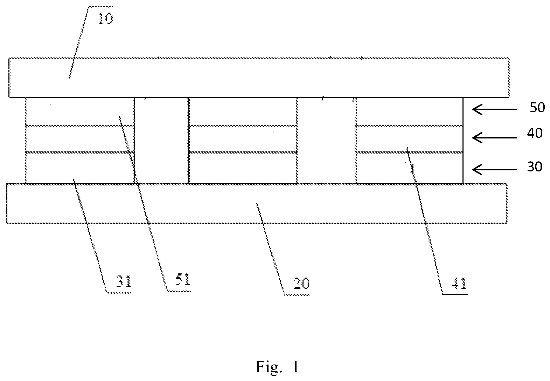

The present disclosure will be described in further detail with reference to the accompanying drawings and embodiments in order to provide a better understanding by those skilled in the art of the technical solutions of the present disclosure. Throughout the description of the disclosure, reference is made to Figs. 1-7. When referring to the figures, like structures and units shown throughout are indicated with like reference numerals.

In the description of the specification, references made to the term "some embodiment," "some embodiments," and "exemplary embodiments," "example," and "specific example," or "some examples" and the like are intended to refer that specific features and structures, materials or characteristics described in connection with the embodiment or example that are included in at least some embodiments or example of the present disclosure. The schematic expression of the terms does not necessarily refer to the same embodiment or example. Moreover, the specific features, structures, materials or characteristics described may be included in any suitable manner in any one or more embodiments or examples.

The steps illustrated in the flowchart of the figures may be executed in a computer system such as a set of computer executable instructions. Also, although the logical order is shown in the flowcharts, in some cases, the steps shown or described may be performed in a different order than the ones described herein.

Unless otherwise defined, technical terms or scientific terms used in the disclosure of the embodiments of the present disclosure should be construed in the ordinary meaning of those of ordinary skill in the art. The terms "first," "second," and similar terms used in the embodiments of the present disclosure do not denote any order, quantity, or importance, but are merely used to distinguish different components. The words "connected" or "coupled" and the like are not limited to physical or mechanical connections, but may include electrical connections, whether direct or indirect. "Up," "down," "left," "right," etc. are only used to indicate relative positional relationships, and when the absolute position of the described object is changed, the relative positional relationship may also change accordingly.

For high-frequency signals, because of the high frequency, it is difficult for ordinary metals to transmit such a high-frequency AC signal. Therefore, the antenna may be directly used as a rectifier diode electrode to directly convert the signal into a DC signal. Even so, the general diode cannot meet the high frequency requirements. Thus, a metal-insulator-metal (MIM) structure may be used to convert the high frequency AC signal to the DC signal.

Fig. 1 is a schematic structural diagram of a signal processing apparatus according to one embodiment of the present disclosure. As shown in Fig. 1, the signal processing apparatus includes a first substrate 10 and a second substrate 20 opposite the first substrate 10. The signal processing apparatus may further include a first antenna layer 30, an insulating layer 40, and a conductive layer 50 disposed between the first substrate 10 and the second substrate 20.

The first antenna layer 30 is disposed on a side of the second substrate 20 facing the first substrate 10. The insulating layer 40 is disposed on a side of the first antenna layer 30 facing the first substrate 10. The conductive layer 50 is disposed on a side of the insulating layer 40 facing the first substrate 10.

The first antenna layer 30 includes a plurality of antenna units 31, each for receiving signals in a different frequency range. The insulating layer 40 includes a plurality of sub-insulating layers 41. The conductive layer 50 includes a plurality of conductive electrodes 51. The plurality of sub-insulating layers 41 and the plurality of conductive electrodes 51 are in one-to-one correspondence with the plurality of antenna units 31.

In the embodiments, each antenna unit is configured to receive signals in a different frequency range such as in a range of 300 Mhz to 600 Mhz, or a range of 1Ghz to 2.4 Ghz, or a range of 2.4 Ghz to 4.9 Ghz respectively, convert the received signals into an AC signals, transmit a part of the AC signals to the corresponding sub-insulating layer and the conductive electrode, and output another part of the AC signals. A capacitance is formed between each antenna unit, the corresponding sub-insulating layer and the conductive electrode, and the capacitance is functionally equivalent to a rectifier diode and converts the AC signals transmitted from the antenna unit into a corresponding direct current signal. The conductive electrode is used to output the direct current signal.

It should be noted that the plurality of sub-insulating layers and the plurality of conductive electrodes being in one-to-one correspondence with the plurality of antenna units indicates that the number of the sub-insulating layers, the number of the conductive electrodes, and the number of the antenna units are the same. The sub-insulating layers may be distributed in an array, the conductive electrodes may be distributed in an array, and the antenna units may be distributed in an array. However, the embodiments of the present disclosure are not limited to such distributions.

In some embodiments, each antenna unit is independent, and the signal in the received frequency range refers to an electromagnetic wave signal. In addition, the structure of each antenna unit may be same or different.

In addition, the signal processing apparatus provided by the embodiments of the present disclosure may further include an antenna structure of the existing electromagnetic wave monitoring system, wherein a processor is combined with a thin film transistor to rectify the AC signal of the antenna into a DC signal.

In one embodiment, the signal processing apparatus further includes: a processor. The processor is respectively connected to the conductive layer and the first antenna layer, and specifically, the processor is respectively connected to each of the conductive electrodes of the conductive layer and each of the antenna units of the first antenna layer.

In one embodiment, the processor is configured to detect a DC signal outputted by the conductive electrode, determine whether the signals received by the antenna unit include a signal of a preset frequency based on the DC signal, receive an AC signal when the signal of the preset frequency exists in the received signals, amplify the AC signal, and transmit the processed AC signal.

In some embodiments, the processor amplifies non-linearly the AC signal. On one hand, such amplification can improve the power. On the other hand, such amplification can remove effective information and radiate the processed AC signals out to form a co-channel interference signal, thereby overcoming the problem of being monitored and leaking information.

Optionally, the processor may be a central processing unit (CPU) or a micro controller unit (MCU).

In some embodiments, the antenna unit includes a microstrip antenna.

In some embodiments, the material for the sub-insulating layer includes silicon oxide, silicon nitride, or a composite of silicon oxide and silicon nitride.

In some embodiments, the number of antenna units for receiving signals in a certain frequency range is at least one. Considering the spatial energy density distribution, the antenna units for detecting signals in the same frequency range have the same size, and the antenna units for detecting signals in different frequency ranges have different sizes. In addition, the antenna units are arranged in an array between the first substrate and the second substrate. The larger the area occupied by the antenna units in the array, the larger the area for receiving the signals. The specific arrangement of the antenna units is not limited herein and can be determined according to the actual requirements.

It should be noted that the DC signals converted from signals in different frequency ranges are different. Therefore, the processor can detect the intensity and change of the electromagnetic wave signal received by the corresponding antenna unit based on the DC signal output by each conductive electrode, thereby realizing detection and analysis of signals of different bands.

In some embodiments, the first substrate 10 and the second substrate 20 may be a glass substrate, a plastic substrate, a quartz substrate, or the like.

The signal processing apparatus provided by some embodiments of the present disclosure includes: a first substrate and a second substrate opposite the first substrate. The signal process apparatus may further include a first antenna layer, an insulating layer and a conductive layer disposed between the first substrate and the second substrate. The first antenna layer is disposed on a side of the second substrate facing the first substrate; the insulating layer is disposed on a side of the first antenna layer facing the first substrate; and the conductive layer is disposed on a side of the insulating layer facing the first substrate. The first antenna layer includes a plurality of antenna units arranged in an array. Each of the antenna units is configured to receive signals in a different frequency range. The insulating layer includes a plurality of sub-insulating layers; the conductive layer includes a plurality of conductive electrodes; the plurality of sub-insulating layers, the plurality of conductive electrodes and the antenna units are in one-to-one correspondence.

In the embodiments of the present disclosure, by providing a plurality of sub-insulating layers, a plurality of conductive electrodes, and a plurality of antenna units, signals in a plurality of different frequency ranges can be received, thereby realizing detection of signals in a plurality of different frequency ranges. At the same time, the combination of the antenna unit, the sub-insulating layer and the conductive electrode capable of realizing the function of the rectifier diode is disposed between the first substrate and the second substrate, thereby avoiding providing rectifier diodes additionally as in the prior art.

In some embodiments, the signal processing apparatus further includes: a second antenna layer. The second antenna layer is disposed between the first substrate and the second substrate for radiating out the processed AC signals as electromagnetic waves. In one embodiment, the processor is coupled to the second antenna layer for transmitting the processed AC signal to the second antenna layer.

In one embodiment, the second antenna layer includes: at least one antenna, and optionally, the antenna may be a microstrip antenna or the like.

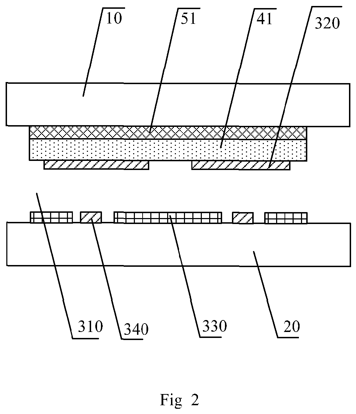

Fig. 2 is a schematic structural diagram of a signal processing apparatus according to one embodiment of the present disclosure. As shown in Fig. 2, at least one antenna unit in the signal processing apparatus includes: a dielectric layer 310, a radiation patch 320, and a ground electrode 330.

It should be noted that the antenna unit in the embodiments of the present disclosure may be the structure described in Fig. 2, or may be an antenna structure in the existing electromagnetic wave monitoring system, which is not limited by this embodiments of the present disclosure.

In one embodiment, the radiation patch 320 is disposed on a side of the dielectric layer 310 facing the first substrate 10; and the ground electrode 330 is disposed on a side of the dielectric layer 310 facing the second substrate 20.

In one embodiment, the shape of the grounding electrode is circular or square, and the material of the grounding electrode is made of metal, which is not limited in this embodiment of the present disclosure.

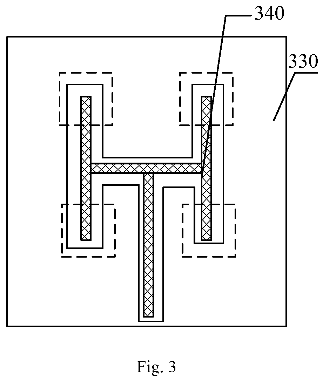

Fig. 3 is a top plan view of a signal processing apparatus according to one embodiment of the present disclosure. Fig. 3 takes the example of a square ground electrode for illustration purpose only.

In one embodiment, the dielectric layer may be made of an insulating material such as silicon oxide, silicon nitride or a composite of silicon oxide and silicon nitride. The dielectric layer can also be made of a material with adjustable energy-saving coefficient such as liquid crystals. In this case, the specific frequency received by the antenna can be scanned within a certain range by adjusting the dielectric constant of the liquid crystals.

In some embodiments, as shown in Fig. 2, the signal processing apparatus may further include a conductive wire 340. The conductive wire 340 is used to lead out the AC signal sensed by the antenna unit.

In one embodiment, the conductive wire 340 may be disposed in the same layer as the ground electrode 330, or may be disposed on the side of the ground electrode 330 facing the first substrate 10. Fig. 2 and Fig. 3 are examples in which the conductive wire 340 and the ground electrode 330 are in the same layer. However, the embodiments of the present disclosure are not limited thereto.

In one embodiment, the orthogonal projection of the conductive wire 340 on the first substrate and the orthographic projection of the radiation patch on the first substrate have overlapping regions.

In one embodiment, in order to sense the AC signal converted by the micro-metal patch, the conductive wire is made of the same material as the micro-metal patch.

In one embodiment, in order to transmit the sensed AC signal, the material of the conductive wire is different from the material of the ground electrode.

In one embodiment, the conductive wire and the ground electrode are used to sense the AC signal oscillated by the radiation patch, and transmit the AC signal to the processor through the conductive wire.

In one embodiment, as shown in Fig. 3, the conductive wire 340 is of the H-type. In order to ensure that the antenna unit can lead out the AC signals, the orthographic projection of the conductive wire on the first substrate and the orthographic projection of the radiation patch on the first substrate overlap.

In one embodiment, the conductive wire 340 is a transmission line.

In one embodiment, in order to ensure that the signal processing apparatus can rectify the AC signal converted by the antenna unit, the conductivity of the radiation patch 320 is greater than the conductivity of the conductive electrode.

In some embodiments, the materials of the radiation patches included in the plurality of antenna units may be the same or different, and may be determined according to actual needs. In one embodiment, in order to simplify the process, the radiation patches of the plurality of antenna units may be made of the same material.

In some embodiments, the radiation patch and the conductive electrode are made of different materials. The radiation patch is made of a metal having a small resistivity such as gold, and the conductive electrode is made of a transparent conductive material.

In some embodiments, the material of the conductive electrode includes indium tin oxide ITO, and the shape of the conductive electrode may be a square shape, and may also be a circular shape, which is determined according to actual needs, and is not limited in this embodiment of the present disclosure.

In one embodiment, the radiation patch in the antenna unit forms a capacitance with the corresponding sub-insulating layer and the conductive electrode. Because the conductivity of the radiation patch and the conductivity of the conductive electrode are different, the work functions of the radiation patch and the conductive electrode are also different. The AC signal converted by the radiation patch transmits only a positive level under the action of the radiation patch, the sub-insulating layer and the conductive electrode, and cannot transmit a negative level. That is, the radiation patch, the sub-insulating layer, and the conductive electrode are functionally equivalent to the rectifier diode.

In some embodiments, in order to ensure that the radiation patch, the sub-insulating layer and the conductive electrode are functionally equivalent to the rectifier diode, the orthographic projection of the conductive electrode on the first substrate and the orthographic projection of the radiation patch on the first substrate have a first overlapping region. Furthermore, an orthographic projection of the sub-insulating layer on the first substrate overlap the first overlapping region to produce a second overlapping region. That is, the conductive electrode, the sub-insulating layer, and the radiation patch form a capacitor.

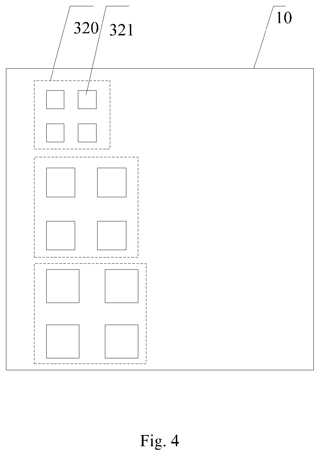

Fig. 4 is a top view of a signal processing apparatus according to one embodiment of the present disclosure. As shown in Fig. 4, the radiation patch 320 of each antenna unit includes: a plurality of micro-metal patches 321.

In one embodiment, the number of the micro-metal patches 321 in an antenna unit may be an even number. The specific number of the micro-metal patches 321 in an antenna unit may be determined according to actual needs. The number of micro-metal patches included in each antenna unit may be the same or different. FIG. 4 shows an example in which each antenna unit includes four micro-metal patches.

It should be noted that in order to avoid the bulk of the microstrip antenna, the number of micro-metal patches in each antenna does not need to be too large.

In some embodiments, the shape of the micro-metal patch may be a rectangle or a square shape. FIG. 4 is an example in which the micro-metal patch is a square shape, and the embodiment of the present disclosure is not limited thereto.

In some embodiments, the sizes of the micro-metal patches of the antenna units for receiving signals in different frequency ranges are different, and specifically, the size includes the length, width or thickness of the micro-metal patch.

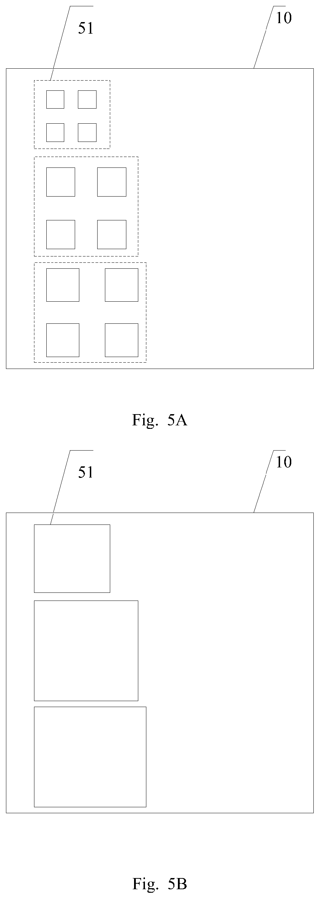

Fig. 5A is a top view of a conductive electrode according to one embodiment of the present disclosure. As shown in FIG. 5A, in order to prevent the conductive electrode from blocking the AC signal, the pattern of the conductive electrode 51 may be the same as the pattern of the radiation patch of the corresponding antenna unit. That is, the orthographic projection of the conductive electrode on the first substrate coincides with the orthographic projection of the radiation patch of the corresponding antenna unit on the first substrate.

Fig. 5B is a top view of a conductive electrode according to one embodiment of the present disclosure. As shown in Fig. 5B, the orthographic projection of the conductive electrode 51 on the first substrate covers the orthographic projection of the radiation patch of the corresponding antenna unit on the first substrate. In this embodiment, the conductive layer is made of a material having a high resistivity, and the conductive layer has almost no blocking effect on the AC signal due to the higher resistivity.

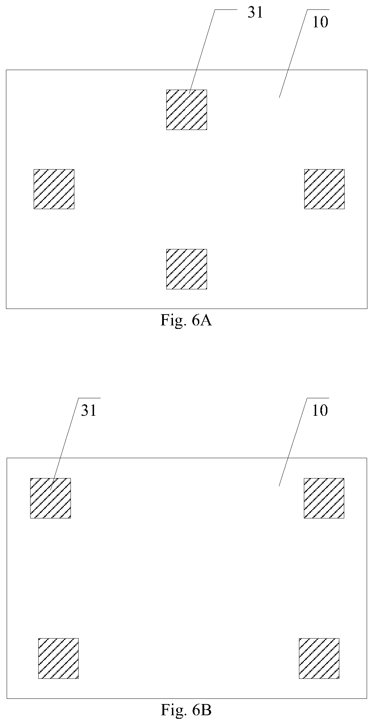

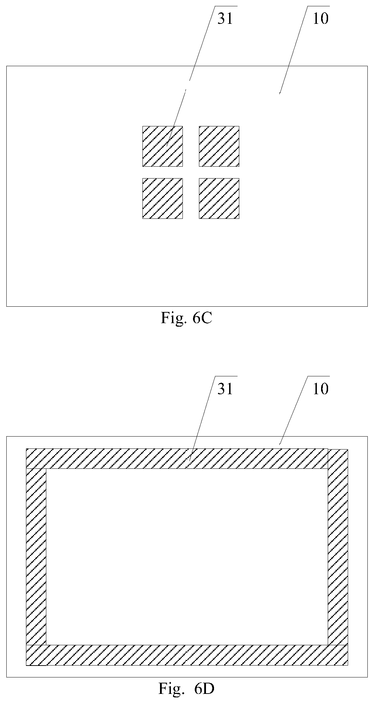

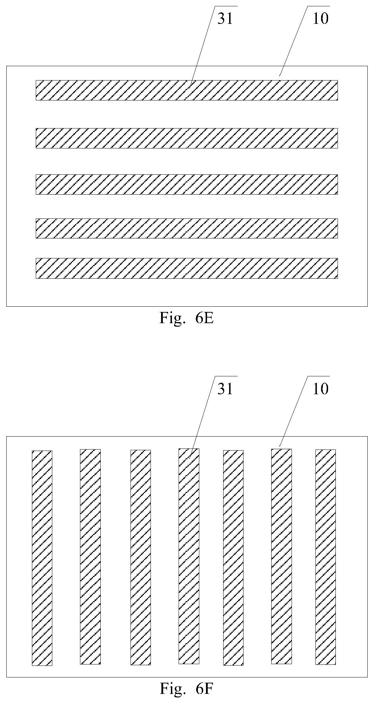

In some embodiments, the micro-metal patches 321 are distributed on the first substrate 10 in a cluster or strip form. Figs. 6A-6F are schematic diagrams showing the distribution of micro-metal patches according to embodiments of the present disclosure. Fig. 6A illustrates an example in which antenna units 31 are distributed in a cluster form around the first substrate. Fig. 6B shows an example in which antenna units 31 are distributed in clusters on four corners of the first substrate. Fig. 6C shows an example in which antenna units 31are distributed in the form of a cluster at the center of the first substrate. FIG. 6D illustrates an example in which antenna units 31 are distributed in a strip form around the first substrate. FIG. 6E illustrates an example in which the antenna units 31 are laterally distributed on the entire first substrate. FIG. 6F illustrates an example in which the antenna units 31are longitudinally distributed on the entire first substrate. The distribution of the antenna units 31 is not specifically limited in the embodiment of the present disclosure.

In one embodiment, each of the plurality of antenna units 31 has a shape of a square or a rectangle and the plurality of antenna units 31 are distributed on the first substrate in a cluster or strip form.

It should be noted that the structure of the plurality of antenna units in the embodiments of the present disclosure may be similar, and the difference thereof is only the size of the antenna unit, such as the length, width or thickness of the micro-metal patch.

Without being held to a particular theory, the operating principle of the signal processing apparatus provided by the embodiment of the present disclosure is specifically described below:
A plurality of micro-metal patches in the antenna unit receive electromagnetic wave signals in a certain frequency range, and converts the received electromagnetic wave signals into AC signals. A part of the AC signals is converted into a DC signal under the rectification of the micro-metal patches, the corresponding sub-insulating layer and the conductive electrode. At the same time, another part of the AC signals converted by the antenna unit is transmitted to the processor under the action of the conductive layer, the dielectric layer, the ground electrode and the micro-metal patch. The processor detects the DC signal, and determines whether the received signals have a signal of a preset frequency based on the DC current. If yes, the processor performs nonlinear amplification processing on the corresponding AC signals of the received signals, and transmits the processed AC signals to the second antenna layer. The second antenna layer radiates out the received processed AC signal in the form of electromagnetic waves for signal interference.

Since the frequency bands for the first and second antennas are different, mutual interference does not occur substantially as long as the positions of the first and second antennas do not overlap.

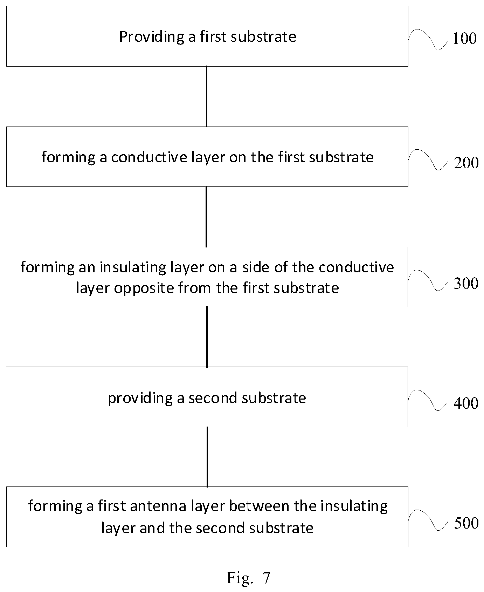

Another example of the present disclosure also provides a method for preparing a signal processing apparatus according to one embodiment of the present disclosure. Fig. 7 is a flowchart of a method for fabricating a signal processing apparatus according to one embodiment of the present disclosure. As shown in Fig. 7, the signal processing apparatus provided by the embodiment of the present disclosure includes the following steps:
Step 100 includes providing a first substrate. The first substrate may be a glass substrate, a plastic substrate, a quartz substrate, or the like, and the embodiment of the present disclosure is not limited thereto.
Step 200 includes forming a conductive layer on the first substrate. The conductive layer may include a plurality of conductive electrodes. In some embodiments, the step 200 specifically includes: depositing a transparent conductive film on the first substrate, and forming a conductive layer including a plurality of conductive electrodes by a patterning process.
Step 300 includes forming an insulating layer on a side of the conductive layer opposite from the first substrate. In some embodiments, the insulating layer includes: a plurality of sub-insulating layers. It should be noted that the plurality of sub-insulating layers are disposed in the same layer.

In some embodiments, the material for fabricating the sub-insulating layer includes silicon oxide, silicon nitride or a composite of silicon oxide and silicon nitride.

In some embodiments, step 300 includes depositing an insulating material on a side of the conductive layer opposite from the first substrate and processing the insulating material by using a process of multiple exposure or gray scale exposure to form the insulating layer.

It should be noted that the thickness of the sub-insulating layer corresponding to different antenna units may be the same or different and the embodiment of the present disclosure does not limit thereto.

In some embodiments, the width of the wavelength band to be detected is wide in the embodiment of the present disclosure, and requirements for the material performance are different for the electromagnetic waves at different frequencies. The insulating layer provided by the embodiments of the present disclosure can adopt the following two processes. The first process includes a plurality of exposures. In particular, different masks can be used to perform the multiple exposure processes to form micro-metal patches of different frequencies. The second process includes grayscale exposure. In addition to the use of different insulation materials, the object can be achieved with different technical thickness of the insulating layer. In order to achieve different insulation thickness in one process, the thickness of the insulating layer can be controlled by controlling the exposure intensity.

Step 400 includes providing a second substrate. In one embodiment, the second substrate may be a glass substrate, a plastic substrate, a quartz substrate, or the like, and the embodiment of the present disclosure is not limited thereto.

Step 500 involves forming a first antenna layer between the insulating layer and the second substrate. In some embodiments, the first antenna layer includes a plurality of antenna units, each of which is configured to receive signals in a different frequency range.

In some embodiments, step 500 specifically includes forming a radiation patch on a side of the insulating layer opposite from the first substrate by using a process of multiple exposures or gray scale exposure and forming a ground electrode on a side of the second substrate facing the first substrate. A dielectric layer is provided between the ground electrode and the radiation patch.

In some embodiments, the materials of the radiation patches included in the plurality of antenna units may be the same or different, and may be determined according to actual needs. In one embodiment, in order to simplify the process, the radiation patches of the plurality of antenna units may be made of the same material.

In one embodiment, the plurality of sub-insulating layers, the plurality of conductive electrodes and the plurality of antenna units are in one-to-one correspondence.

In one embodiment, in order to ensure the conductivity of the radiation patch, the radiation patch used is made of gold.

In some embodiments, the width of the wavelength band to be detected is wide in the embodiment of the present disclosure, and requirements for the material performance are different for the electromagnetic waves at different frequencies. The radiation patch provided by the specific embodiment of the present disclosure can adopt the following two processes. The first process includes a plurality of exposures. As the frequency range gradually increases, the resistance required for micro-metal patches is getting lower and lower. If different materials are used, different masks can be used for multiple exposure processes to form micro-metal patches of different frequencies. The second process involves grayscale exposure. Different requirement on resistance of micro-metal patches are needed for electromagnetic waves of different frequency ranges. Different resistance can be achieved by using different metal materials as well as different technical thicknesses of the micro-metal patches. In order to achieve different metal thicknesses in a single process, the thickness of the metal material is controlled by controlling the exposure intensity.

In the embodiments of the present disclosure, a plurality of conductive electrodes, a plurality of sub-insulating layers and a plurality of antenna units are simultaneously prepared, which simplifies the process flow and saves costs.

The method for fabricating a signal processing apparatus according to one embodiment of the present disclosure includes providing a first substrate and forming a conductive layer on the first substrate. The conductive layer includes a plurality of conductive electrodes. The method further includes forming an insulating layer on a side of the conductive layer opposite from the first substrate. The insulating layer includes a plurality of sub-insulating layers. The method further includes providing a second substrate and forming a first antenna layer between the insulating layer and the second substrate. The first antenna layer may include a plurality of antenna units. Each antenna unit is used for receiving signals in a different frequency range. The plurality of sub-insulating layers, the plurality of conductive electrodes and the plurality of antenna units are in one-to-one correspondence. In the embodiments of the present disclosure, by providing a plurality of sub-insulating layers, a plurality of conductive electrodes and a plurality of antenna units, signals in a plurality of different frequency ranges can be received, thereby realizing detection of signals in a plurality of different frequency ranges. At the same time, the antenna unit, the sub-insulating layer and the conductive electrode capable of realizing the function of the rectifier diode are disposed between the first substrate and the second substrate, thereby avoiding providing the rectifier diode additionally as in the prior art.

In some embodiments, after the grounding electrode is formed on the side of the second substrate facing the first substrate, the method further includes forming a conductive wire for leading out the signals on a side of the second substrate facing the first substrate.

In some embodiments, the method for fabricating a signal processing apparatus according to one embodiment of the present disclosure further includes forming a second antenna layer for radiating signals on the first substrate or the second substrate. Specifically, the step may be before the step 200, or after the step 200, the embodiment of the present disclosure is not limited thereto.

The drawings of the embodiments of the present disclosure refer to only the structures involved in the embodiments of the present disclosure, and other structures may refer to the general design. For the sake of clarity, the thickness and size of the layers or microstructures are exaggerated in the figures used to describe embodiments of the disclosure. When an unit such as a layer, a film, a region or a substrate is referred to as being "on" or "under" another unit, the unit can be "directly" on or under the another unit, or there are intermediate components between the two units.

## Claims

1. An antenna apparatus, comprising:
a first substrate (10);
a second substrate (20) opposite the first substrate (10);
a first antenna layer (30) on a side of the second substrate (20) facing the first substrate (10);
an insulating layer (40) on a side of the first antenna layer (30) facing the first substrate (10);
a conductive layer (50) on a side of the insulating layer (40) facing the first substrate (10); and
a second antenna layer, wherein the second antenna layer is between the first substrate (10) and the second substrate (20); and
wherein the first antenna layer (30) is configured to receive signals in different frequency ranges, and the first antenna layer (30), the insulating layer (40) and the conductive layer (50) are all between the first substrate (10) and the second substrate (20); and
wherein the second antenna layer is configured to radiate the signals, and an orthographic projection of the first antenna layer (30) on the first substrate (10) and an orthographic projection of the second antenna layer on the first substrate (10) do not overlap;
wherein the first antenna layer (30) comprises a plurality of antenna units (31), each of the plurality of antenna units (31) comprises a radiation patch (320) and is configured to receive the signals in one of the different frequency ranges; the insulating layer (40) comprises a plurality of sub-insulating layers (41); the conductive layer (50) comprises a plurality of conductive electrodes (51); and the plurality of the sub-insulating layers (41), the plurality of the conductive electrodes (51), and the plurality of the antenna units (31) are in one-to-one correspondence; and
wherein at least one of the plurality of antenna units (31), at least one of the plurality of conductive electrodes (51), and at least one of the plurality of sub-insulating layers (41) constitute a rectifier diode structure, and a material of the plurality of sub-insulating layers comprises silicon oxide, silicon nitride, or a composite of silicon oxide and silicon nitride,
wherein a capacitance is formed between the radiation patch (320), the corresponding sub-insulating layer (41) and the corresponding conductive electrode (51), and a conductivity of the radiation patch (320) is higher than a conductivity of the corresponding conductive electrode (51).

2. The antenna apparatus of claim 1, wherein the at least one of the plurality of the antenna units (31) further comprises a dielectric layer (310), and a ground electrode (330); the radiation patch (320) is on a side of the dielectric layer (310) facing the first substrate (10); and the ground electrode (330) is on a side of the dielectric layer (310) facing the second substrate (20).

3. The antenna apparatus of claim 2, further comprising a conductive wire (340) for leading out the signals;
wherein the conductive wire (340) is on the side of the dielectric layer (310) facing the second substrate (20); an orthogonal projection of the conductive wire (340) on the first substrate (10) and an orthographic projection of the radiation patch (320) on the first substrate (10) overlap.

4. The antenna apparatus of claim 2, wherein an orthographic projection of the conductive electrode (51) on the first substrate (10) and an orthographic projection of the radiation patch (320) on the first substrate (10) have a first overlapping region.

5. The antenna apparatus of claim 4, wherein an orthographic projection of the sub-insulating layer (41) on the first substrate (10) overlaps the first overlapping region.

6. The antenna apparatus of claim 2-5, wherein each of the plurality of antenna units (31) has a shape of a square or a rectangle and the plurality of antenna units (31) are distributed on the first substrate (10) in a cluster or strip form.

7. The antenna apparatus of claim 2-6, wherein the conductive electrode (51) and the radiation patch (320) of one antenna unit (31) corresponding to the conductive electrode have a substantially same pattern.

8. The antenna apparatus of claim 6, wherein an orthographic projection of the conductive electrode (51) on the first substrate (10) covers an orthographic projection of the radiation patch (320) of one antenna unit (31) corresponding to the conductive electrode (51) on the first substrate (10).

9. The antenna apparatus of any one of claims 2-8, wherein each of the plurality of conductive electrodes (51) is made of a transparent conductive material.

10. The antenna apparatus of any one of claims 2-9, wherein the ground electrode (330) has a shape of a square or a circle; or wherein the dielectric layer (310) includes liquid crystals.

11. A method of preparing an antenna apparatus, comprising:
providing a first substrate (10);
forming a conductive layer (50) on the first substrate (10), the conductive layer (50) comprising a plurality of conductive electrodes (51);
forming an insulating layer (40) on a side of the conductive layer (50) opposite from the first substrate (10), the insulating layer (40) comprising a plurality of sub-insulating layers (41);
providing a second substrate (20) opposite the first substrate (10);
forming a first antenna layer (30) between the insulating layer (40) and the second substrate (20), the first antenna layer (30) comprising a plurality of antenna units (31), each of the antenna units (31) being configured to receive signals in a different frequency range; and
forming a second antenna layer on the first substrate (10) or the second substrate (20), wherein the second antenna layer is configured to radiate the signals, and an orthographic projection of the first antenna layer (30) on the first substrate (10) and an orthographic projection of the second antenna layer on the first substrate (10) do not overlap,
wherein the first antenna layer (30), the insulating layer (40) and the conductive layer (50) are all between the first substrate (10) and the second substrate (20);
wherein each of the plurality of antenna units (31) comprises a radiation patch (320) and is configured to receive the signals in one of the different frequency ranges; the plurality of the sub-insulating layers (41), the plurality of the conductive electrodes (51), and the plurality of the antenna units (31) are in one-to-one correspondence; and
wherein at least one of the plurality of antenna units (31), at least one of the plurality of conductive electrodes (51), and at least one of the plurality of sub-insulating layers (41) constitute a rectifier diode structure, and a material of the plurality of sub-insulating layers comprises silicon oxide, silicon nitride, or a composite of silicon oxide and silicon nitride,
wherein a capacitance is formed between the radiation patch (320), the corresponding sub-insulating layer (41) and the corresponding conductive electrode (51), and a conductivity of the radiation patch (320) is higher than a conductivity of the corresponding conductive electrode (51).

12. The method of preparing the antenna apparatus of claim 11, wherein forming the insulating layer (40) on the side of the conductive layer (50) opposite from the first substrate (10) comprises forming the insulating layer (40) on the side of the conductive layer (50) opposite from the first substrate (10) by a process of multiple exposures or a gray scale exposure.

## Patentansprüche

1. Antennenvorrichtung, aufweisend:
ein erstes Substrat (10);
ein zweites Substrat (20), das dem ersten Substrat (10) gegenüberliegt;
eine erste Antennenschicht (30) auf einer Seite des zweiten Substrats (20), die dem ersten Substrat (10) zugewandt ist;
eine Isolierschicht (40) auf einer Seite der ersten Antennenschicht (30), die dem ersten Substrat (10) zugewandt ist;
eine leitfähige Schicht (50) auf einer Seite der Isolierschicht (40), die dem ersten Substrat (10) zugewandt ist; und
eine zweite Antennenschicht, wobei sich die zweite Antennenschicht zwischen dem ersten Substrat (10) und dem zweiten Substrat (20) befindet; und
wobei die erste Antennenschicht (30) konfiguriert ist, um Signale in unterschiedlichen Frequenzbereichen zu empfangen, und die erste Antennenschicht (30), die Isolierschicht (40) und die leitfähige Schicht (50) sich alle zwischen dem ersten Substrat (10) und dem zweiten Substrat (20) befinden; und
wobei die zweite Antennenschicht konfiguriert ist, um die Signale auszustrahlen, und eine orthographische Projektion der ersten Antennenschicht (30) auf dem ersten Substrat (10) und eine orthographische Projektion der zweiten Antennenschicht auf dem ersten Substrat (10) sich nicht überlappen;
wobei die erste Antennenschicht (30) mehrere Antenneneinheiten (31) aufweist, wobei jede der mehreren Antenneneinheiten (31) einen Strahlungspatch (320) aufweist und konfiguriert ist, um die Signale in einem der unterschiedlichen Frequenzbereiche zu empfangen; die Isolierschicht (40) mehrere Sub-Isolierschichten (41) aufweist; die leitfähige Schicht (50) mehrere leitfähige Elektroden (51) aufweist; und die mehreren Sub-Isolierschichten (41), die mehreren leitfähigen Elektroden (51) und die mehreren Antenneneinheiten (31) in einer Eins-zu-eins-Entsprechung zueinander stehen; und
wobei mindestens eine der mehreren Antenneneinheiten (31), mindestens eine der mehreren leitfähigen Elektroden (51) und mindestens eine der mehreren Sub-Isolierschichten (41) eine Gleichrichterdiodenstruktur bilden und ein Material der mehreren Sub-Isolierschichten Siliziumoxid, Siliziumnitrid oder einen Verbundwerkstoff aus Siliziumoxid und Siliziumnitrid umfasst,
wobei eine Kapazität zwischen dem Strahlungspatch (320), der entsprechenden Sub-Isolierschicht (41) und der entsprechenden leitfähigen Elektrode (51) gebildet ist und eine Leitfähigkeit des Strahlungspatches (320) höher ist als eine Leitfähigkeit der entsprechenden leitfähigen Elektrode (51).

2. Antennenvorrichtung nach Anspruch 1, wobei die mindestens eine der mehreren Antenneneinheiten (31) ferner eine dielektrische Schicht (310) und eine Masseelektrode (330) aufweist; wobei der Strahlungspatch (320) sich auf einer Seite der dielektrischen Schicht (310) befindet, die dem ersten Substrat (10) zugewandt ist; und wobei die Masseelektrode (330) sich auf einer Seite der dielektrischen Schicht (310) befindet, die dem zweiten Substrat (20) zugewandt ist.

3. Antennenvorrichtung nach Anspruch 2, ferner einen leitfähigen Draht (340) zum Ableiten der Signale aufweisend;
wobei sich der leitfähige Draht (340) auf der Seite der dielektrischen Schicht (310) befindet, die dem zweiten Substrat (20) zugewandt ist; eine orthogonale Projektion des leitfähigen Drahtes (340) auf dem ersten Substrat (10) und eine orthographische Projektion des Strahlungspatches (320) auf dem ersten Substrat (10) sich überlappen.

4. Antennenvorrichtung nach Anspruch 2, wobei eine orthographische Projektion der leitfähigen Elektrode (51) auf dem ersten Substrat (10) und eine orthographische Projektion des Strahlungspatches (320) auf dem ersten Substrat (10) einen ersten überlappenden Bereich aufweisen.

5. Antennenvorrichtung nach Anspruch 4, wobei eine orthographische Projektion der Sub-Isolierschicht (41) auf dem ersten Substrat (10) den ersten überlappenden Bereich überlappt.

6. Antennenvorrichtung nach Anspruch 2 bis 5, wobei jede der mehreren Antenneneinheiten (31) die Gestalt eines Quadrats oder eines Rechtecks hat und die mehreren Antenneneinheiten (31) in Form eines Clusters oder Streifens auf dem ersten Substrat (10) verteilt sind.

7. Antennenvorrichtung nach Anspruch 2 bis 6, wobei die leitfähige Elektrode (51) und der Strahlungspatch (320) einer Antenneneinheit (31), die der leitfähigen Elektrode entspricht, im Wesentlichen ein gleiches Muster haben.

8. Antennenvorrichtung nach Anspruch 6, wobei eine orthographische Projektion der leitfähigen Elektrode (51) auf dem ersten Substrat (10) eine orthographische Projektion des Strahlungspatches (320) einer Antenneneinheit (31) bedeckt, die der leitfähigen Elektrode (51) auf dem ersten Substrat (10) entspricht.

9. Antennenvorrichtung nach einem der Ansprüche 2 bis 8, wobei jede der mehreren leitfähigen Elektroden (51) aus einem transparenten leitfähigen Material hergestellt ist.

10. Antennenvorrichtung nach einem der Ansprüche 2 bis 9, wobei die Masseelektrode (330) die Gestalt eines Quadrats oder eines Kreises hat; oder wobei die dielektrische Schicht (310) Flüssigkristalle enthält.

11. Verfahren zur Herstellung einer Antennenvorrichtung, umfassend:
Vorsehen eines ersten Substrats (10);
Bilden einer leitfähigen Schicht (50) auf dem ersten Substrat (10), wobei die leitfähige Schicht (50) mehrere leitfähige Elektroden (51) aufweist;
Bilden einer Isolierschicht (40) auf einer Seite der leitfähigen Schicht (50), die dem ersten Substrat (10) gegenüberliegt, wobei die Isolierschicht (40) mehrere Sub-Isolierschichten (41) aufweist;
Vorsehen eines zweiten Substrats (20), das dem ersten Substrat (10) gegenüberliegt;
Bilden einer ersten Antennenschicht (30) zwischen der Isolierschicht (40) und dem zweiten Substrat (20), wobei die erste Antennenschicht (30) mehrere Antenneneinheiten (31) aufweist, wobei jede der Antenneneinheiten (31) konfiguriert ist, um Signale in einem unterschiedlichen Frequenzbereich zu empfangen; und
Bilden einer zweiten Antennenschicht auf dem ersten Substrat (10) oder auf dem zweiten Substrat (20), wobei die zweite Antennenschicht konfiguriert ist, um die Signale auszustrahlen, und eine orthographische Projektion der ersten Antennenschicht (30) auf dem ersten Substrat (10) und eine orthographische Projektion der zweiten Antennenschicht auf dem ersten Substrat (10) sich nicht überlappen,
wobei die erste Antennenschicht (30), die Isolierschicht (40) und die leitfähige Schicht (50) sich alle zwischen dem ersten Substrat (10) und dem zweiten Substrat (20) befinden;
wobei jede der mehreren Antenneneinheiten (31) einen Strahlungspatch (320) aufweist und konfiguriert ist, um die Signale in einem der unterschiedlichen Frequenzbereiche zu empfangen; die mehreren Sub-Isolierschichten (41), die mehreren leitfähigen Elektroden (51) und die mehreren Antenneneinheiten (31) in einer Eins-zu-eins-Entsprechung zueinander stehen; und
wobei mindestens eine der mehreren Antenneneinheiten (31), mindestens eine der mehreren leitfähigen Elektroden (51) und mindestens eine der mehreren Sub-Isolierschichten (41) eine Gleichrichterdiodenstruktur bilden und ein Material der mehreren Sub-Isolierschichten Siliziumoxid, Siliziumnitrid oder einen Verbundwerkstoff aus Siliziumoxid und Siliziumnitrid umfasst,
wobei eine Kapazität zwischen dem Strahlungspatch (320), der entsprechenden Sub-Isolierschicht (41) und der entsprechenden leitfähigen Elektrode (51) gebildet wird und eine Leitfähigkeit des Strahlungspatches (320) höher ist als eine Leitfähigkeit der entsprechenden leitfähigen Elektrode (51).

12. Verfahren zur Herstellung der Antennenvorrichtung nach Anspruch **11,** wobei das Bilden der Isolierschicht (40) auf der Seite der leitfähigen Schicht (50), die dem ersten Substrat (10) gegenüberliegt, ein Bilden der Isolierschicht (40) auf der Seite der leitfähigen Schicht (50), die dem ersten Substrat (10) gegenüberliegt, durch einen Prozess der Mehrfachbelichtung oder einer Graustufenbelichtung umfasst.

## Revendications

1. Appareil d'antenne comprenant :
un premier substrat (10) ;
un deuxième substrat (20) opposé au premier substrat (10) ;
une première couche d'antenne (30) sur une face du deuxième substrat (20) faisant face au premier substrat (10) ;
une couche isolante (40) sur une face de la première couche d'antenne (30) faisant face au premier substrat (10) ;
une couche conductrice (50) sur une face de la couche isolante (40) faisant face au premier substrat (10) ; et
une deuxième couche d'antenne, dans lequel la deuxième couche d'antenne est située entre le premier substrat (10) et le deuxième substrat (20) ; et
dans lequel la première couche d'antenne (30) est configurée pour recevoir des signaux dans différentes plages de fréquences et la première couche d'antenne (30), la couche isolante (40) et la couche conductrice (50) sont toutes situées entre le premier substrat (10) et le deuxième substrat (20) ; et
dans lequel la deuxième couche d'antenne est configurée pour irradier les signaux et une projection orthographique de la première couche d'antenne (30) sur le premier substrat (10) et une projection orthographique de la deuxième couche d'antenne sur le premier substrat (10) ne se superposent pas ;
dans lequel la première couche d'antenne (30) comprend une pluralité d'unités d'antenne (31), chacune de la pluralité d'unités d'antenne (31) comprend une zone de rayonnement (320) et est configurée pour recevoir les signaux dans une des différentes plages de fréquences ; la couche isolante (40) comprend une pluralité de couches sous-isolantes (41) ; la couche conductrice (50) comprend une pluralité d'électrodes conductrices (51) ; et la pluralité de couches sous-isolantes (41), la pluralité d'électrodes conductrices (51) et la pluralité d'unités d'antenne (31) sont en correspondance biunivoque ; et
dans lequel au moins une de la pluralité d'unités d'antenne (31), au moins une de la pluralité d'électrodes conductrices (51) et au moins une de la pluralité de couches sous-isolantes (41) constituent une structure de diode de redressement et un matériau de la pluralité de couches sous-isolantes comprend de l'oxyde de silicium, du nitrure de silicium ou un composite d'oxyde de silicium et de nitrure de silicium,
dans lequel une capacité est formée entre la zone de rayonnement (320), la couche sous-isolante correspondante (41) et l'électrode conductrice correspondante (51) et la conductivité de la zone de rayonnement (320) est supérieure à une conductivité de l'électrode conductrice correspondante (51).

2. Appareil d'antenne selon la revendication 1, dans lequel au moins une de la pluralité d'unités d'antenne (31) comprend en outre une couche diélectrique (310) et une électrode de masse (330) ; la zone de rayonnement (320) se trouve sur une face de la couche diélectrique (310) faisant face au premier substrat (10) ; et l'électrode de masse (330) se trouve sur une face de la couche diélectrique (310) faisant face au deuxième substrat (20).

3. Appareil d'antenne selon la revendication 2, comprenant en outre un fil conducteur (340) pour faire sortir les signaux ;
dans lequel le fil conducteur (340) se trouve sur la face de la couche diélectrique (310) faisant face au deuxième substrat (20) ; une projection orthogonale du fil conducteur (340) sur le premier substrat (10) et une projection orthogonale de la zone de rayonnement (320) sur le premier substrat (10) se superposent.

4. Appareil d'antenne selon la revendication 2, dans lequel une projection orthographique de l'électrode conductrice (51) sur le premier substrat (10) et une projection orthographique de la zone de rayonnement (320) sur le premier substrat (10) présentent une première zone de superposition.

5. Appareil d'antenne selon la revendication 4, dans lequel une projection orthographique de la couche sous-isolante (41) sur le premier substrat (10) se superpose à la première zone de superposition.

6. Appareil d'antenne selon les revendications 2 à 5, dans lequel chacune de la pluralité d'unités d'antenne (31) présente une forme carrée ou rectangulaire et la pluralité d'unités d'antenne (31) sont réparties sur le premier substrat (10) en grappe ou en bande.

7. Appareil d'antenne selon les revendications 2 à 6, dans lequel l'électrode conductrice (51) et la zone de rayonnement (320) d'une unité d'antenne (31) correspondant à l'électrode conductrice présentent un motif sensiblement identique.

8. Appareil d'antenne selon la revendication 6, dans lequel une projection orthographique de l'électrode conductrice (51) sur le premier substrat (10) recouvre une projection orthographique de la zone de rayonnement (320) d'une unité d'antenne (31) correspondant à l'électrode conductrice (51) sur le premier substrat (10).

9. Appareil d'antenne selon une quelconque des revendications 2 à 8, dans lequel chacune de la pluralité d'électrodes conductrices (51) est constituée d'un matériau conducteur transparent.

10. Appareil d'antenne selon une quelconque des revendications 2 à 9, dans lequel l'électrode de masse (330) a une forme carrée ou circulaire ou dans lequel la couche diélectrique (310) comprend des cristaux liquides.

11. Procédé de préparation d'un appareil d'antenne, comprenant :
la fourniture d'un premier substrat (10) ;
la formation d'une couche conductrice (50) sur le premier substrat (10), la couche conductrice (50) comprenant une pluralité d'électrodes conductrices (51) ;
la formation d'une couche isolante (40) sur une face de la couche conductrice (50) opposé au premier substrat (10), la couche isolante (40) comprenant une pluralité de couches sous-isolantes (41) ;
la fourniture d'un deuxième substrat (20) opposé au premier substrat (10) ;
la formation d'une première couche d'antenne (30) entre la couche isolante (40) et le deuxième substrat (20), la première couche d'antenne (30) comprenant une pluralité d'unités d'antenne (31), chacune des unités d'antenne (31) étant configurée pour recevoir des signaux dans une plage de fréquences différente ; et
la formation d'une deuxième couche d'antenne sur le premier substrat (10) ou le deuxième substrat (20), dans lequel la deuxième couche est configurée pour irradier les signaux et une projection orthographique de la première couche d'antenne (30) sur le premier substrat (10) et une projection orthographique de la deuxième couche d'antenne sur le premier substrat (10) ne se superposent pas,
dans lequel la première couche d'antenne (30), la couche isolante (40) et la couche conductrice (50) sont toutes situées entre le premier substrat (10) et le deuxième substrat (20) ; et
dans lequel chacune de la pluralité d'unités d'antenne (31) comprend une zone de rayonnement (320) et est configurée pour recevoir les signaux dans une des différentes plages de fréquences ; la pluralité de couches sous-isolantes (41), la pluralité d'électrodes conductrices (51) et la pluralité d'unités d'antenne (31) sont en correspondance biunivoque ; et
dans lequel au moins une de la pluralité d'unités d'antenne (31), au moins une de la pluralité d'électrodes conductrices (51) et au moins une de la pluralité de couches sous-isolantes (41) constituent une structure de diode de redressement et un matériau de la pluralité de couches sous-isolantes comprend de l'oxyde de silicium, du nitrure de silicium ou un composite d'oxyde de silicium et de nitrure de silicium,
dans lequel une capacité est formée entre la zone de rayonnement (320), la couche sous-isolante correspondante (41) et l'électrode conductrice correspondante (51) et la conductivité de la zone de rayonnement (320) est supérieure à une conductivité de l'électrode conductrice correspondante (51).

12. Procédé de préparation de l'appareil d'antenne selon la revendication 11, dans lequel la formation de la couche isolante (40) sur la face de la couche conductrice (50) opposée au premier substrat (10) comprend la formation de la couche isolante (40) sur la face de la couche conductrice (50) opposée au premier substrat (10) par un procédé d'expositions multiples ou une exposition en niveaux de gris.
